# EUROPÄISCHE PATENTANMELDUNG

(11) **EP 1 591 849 A1**
(43) Veröffentlichungstag der Anmeldung: **02.11.2005**
(21) Anmeldenummer: 04009999.6
(22) Anmeldetag: 27.04.2004
(51) Int. Cl.: G05B 19/05

(54) **Redundantes Automatisierungssystem umfassend ein Master- und ein Stand-by-Automatisierungsgerät**

(71) Anmelder: SIEMENS AKTIENGESELLSCHAFT, 80333 München (DE)
(72) Erfinder: Humpert, Hans-Dieter, 91334 Hemhofen (DE); Kleyer, Dieter, 91074 Herzogenaurach (DE)

(57) **Zusammenfassung**

Bei einem erfindungsgemäßen redundanten Automatisierungssystem (1) ist neben einem Master- (7) und einem Stand-by-Automatisierungsgerät (9) ein rechnergestütztes Überwachungsgerät (11) vorgesehen, mittels welchem ein Vergleichs-Prozessabbild (21) bezüglich einer Anzahl an Ausgangssignalen (17) des Automatisierungssystems (1) ermittelbar ist.

## Beschreibung

Die Erfindung betrifft ein redundantes Automatisierungssystem zur Steuerung eines technischen Prozesses.

In vielen industriellen Anwendungen werden Automatisierungssysteme zur Steuerung von technischen Prozessen eingesetzt. Ein Ausfall dieser Automatisierungssysteme führt zwangsläufig zu einer Störung des technischen Prozessablaufs und damit beispielsweise zum Ausfall einer Produktion von Gütern oder Energie.

Um eine Unterbrechung des Produktionsprozesses zu verhindern, ist es bekannt, im Rahmen der Automatisierungssysteme sogenannte hochverfügbare Automatisierungsgeräte auf Basis von speicherprogrammierbaren Steuerungen einzusetzen, wobei die Automatisierungsgeräte dabei doppelt vorhanden und Mittel zum Umschalten zwischen den Automatisierungsgeräten im Fehlerfall vorhanden sind.

Derartige Automatisierungslösungen erfordern eine große Investition an Kosten, da die bekannten Systeme hochspezialisiert und technisch sehr komplex und damit auch sehr teuer sind.

Fehler, die während der Steuerung eines technischen Prozesses bezüglich der Automatisierungssysteme auftreten können, betreffen zum einen die auf den Automatisierungsgeräten ablaufende Steuerungssoftware, aber auch die eingesetzten Hardwarekomponenten.

Bezüglich der letztgenannten Fehler entstehen Probleme üblicherweise nicht infolge eines Totalausfalls eines Automatisierungsgeräts, sondern infolge von statischen und/oder sporadischen Störungen von einzelnen Hardwarekomponenten der Automatisierungsgeräte.

Dabei treten in der Folge dann bezüglich des fehlerhaften Automatisierungsgeräts Ausgangssignale auf, welche zwar vorhanden und somit theoretisch auch auf den technischen Prozess geschaltet werden könnten, aber mit Fehlern behaftet sind.

Derartige Fehler können vorübergehender Natur sein, beispielsweise wenn eine Hardwarekomponente eines Automatisierungsgeräts lediglich kurzfristig einen zufälligen Fehler aufweist, beispielsweise verursacht durch eine temporäre Überhitzung der Komponente.

Es ist jedoch auch denkbar, dass eine oder mehrere Hardwarekomponenten ab einem Störungsbeginn dauerhaft verfälschte Ausgangssignale produzieren.

Werden nun bei einem redundanten Automatisierungssystem parallel zwei Automatisierungsgeräte eingesetzt, welche zueinander unterschiedliche Ausgangssignale in Form eines entsprechenden Prozessabbilds aufweisen, so kann praktisch nur bei einem Totalausfall eines Automatisierungsgeräts dieses Gerät sicher als gestört identifiziert werden. Andernfalls ist bei abweichenden Prozessabbildern der Automatisierungsgeräte eines redundanten Automatisierungssystems nicht ohne weiteres entscheidbar, welches der jeweiligen Prozessabbilder als fehlerhaft anzusehen ist.

Der Erfindung liegt daher die Aufgabe zugrunde, ein zu bekannten Lösungen aus dem Stand der Technik alternatives redundantes Automatisierungssystem anzugeben, welches einfach aufgebaut und kostengünstig realisierbar ist.

Insbesondere sollen mittels eines erfindungsgemäßen redundanten Automatisierungssystems Hardwarefehler bezüglich eines der Automatisierungsgeräte sicher erkennbar sein.

Die Aufgabe wird erfindungsgemäß gelöst durch ein redundantes Automatisierungssystem zur Steuerung eines technischen Prozesses umfassend ein Master- und ein Stand-by-Automatisierungsgerät, wobei ein rechnergestütztes Überwachungsgerät sowohl mit dem Master- als auch mit dem Stand-by-Automatisierungsgerät verbunden ist, wobei ein Eingangs-Prozessabbild bezüglich einer Anzahl an Prozessdaten des technischen Prozesses zum Überwachungsgerät übertragbar ist und wobei mittels des Überwachungsgeräts ein Vergleich-Prozessabbild bezüglich einer Anzahl an Ausgangssignalen des Automatisierungssystems ermittelbar ist.

Die Erfindung geht dabei von der Überlegung aus, dass eine Fehlererkennung und Fehlerzuordnung nur dann sicher möglich ist, wenn anhand eines Mehrheitsvotums eine eindeutige Entscheidung getroffen werden kann, welches der Automatisierungsgeräte oder gegebenenfalls das Überwachungsgerät selbst fehlerhaft ist.

Daher ist bei einem erfindungsgemäßen Automatisierungssystem ein vom Master- und Stand-by-Automatisierungsgerät getrenntes rechnergestütztes Überwachungsgerät vorgesehen.

Dieses Überwachungsgerät ist nicht direkt mit der sogenannten Prozessperipherie, also den Ein- und Ausgabeerfassungsgeräten des Automatisierungssystems, verbunden; vielmehr erhält das Überwachungsgerät die Eingangssignale bezüglich des technischen Prozesses indirekt als sogenanntes softwarebasiertes Prozessabbild über eine Kommunikationsverbindung, mittels welcher das Überwachungsgerät mit den genannten Automatisierungsgeräten verbunden ist.

Das Eingangs-Prozessabbild ist dabei im wesentlichen ein softwaretechnisches Abbild von Prozesssignalzuständen zu einem bestimmten Zeitpunkt.

Die genannten Automatisierungsgeräte sind direkt mit der Prozessperipherie verbunden und lesen die dort anfallenden Prozesssignale ein, um daraus das Eingangs-Prozessabbild zu generieren.

Dieses Eingangs-Prozessabbild wird dann an das Überwachungsgerät übermittelt.

Der Zweck von Automatisierungsgeräten besteht im wesentlichen darin, die Prozesssignale mittels des genannten Eingangs-Prozessabbilds zu verarbeiten, beispielsweise mittels Regelungs- und/oder Steuerungsalgorithmen, und die dabei erzeugten Ausgangssignale an die Prozessperipherie zu übermitteln, um dem technischen Prozess zu steuern.

Wenn nun bei einem redundanten Automatisierungssystem ein Fehler bezüglich eines Automatisierungsgeräts auftritt, welcher nicht zu einem Totalausfall des betreffenden Automatisierungsgeräts führt, so unterscheiden sich die Ausgangssignale der Automatisierungsgeräte und es ist nicht ohne weiteres entscheidbar, ob nun die Ausgangssignale des einen oder des anderen Automatisierungsgeräts fehlerfrei und an die Prozessperipherie zu übermitteln sind.

Beim erfindungsgemäßen Automatisierungssystem ist daher das Überwachungsgerät vorgesehen, mittels welchem durch Verarbeitung des Eingangs-Prozessabbilds das Vergleichs-Prozessabbild ermittelt wird. Folglich stehen dann nicht nur das jeweilige Ausgangs-Prozessabbild der Automatisierungsgeräte, sondern auch das Vergleichs-Prozessabbild zur Verfügung, um über die Fehlerfreiheit der genannten Prozessabbilder entscheiden zu können.

Bei einer bevorzugten Ausführungsform ist daher vorgesehen, dass mittels des Überwachungsgeräts das Vergleichs-Prozessabbild vergleichbar ist sowohl mit einem ersten Prozessabbild bezüglich einer Anzahl an Ausgangssignalen des Master-Automatisierungsgeräts, als auch mit einem zweiten Prozessabbild bezüglich einer entsprechenden Anzahl an Ausgangssignalen des Stand-by-Automatisierungsgeräts.

Wenn nun eines der genannten Geräte von einem Fehler betroffen ist, so stimmen die Prozessabbilder der beiden anderen Geräte miteinander überein. Das fehlerhafte Prozessabbild ist somit eindeutig dem fehlerhaften Gerät zuzuordnen.

Bevorzugt ist daher in Art einer Zwei-Aus-Drei-Entscheidung entscheidbar, ob und gegebenenfalls welches der Geräte fehlerhaft arbeitet.

"Zwei-Aus-Drei" bedeutet in diesem Zusammenhang, dass untersucht wird, ob sich zum einen die Prozessabbilder überhaupt unterscheiden und falls dies der Fall ist, welches der Prozessabbilder unterschiedlich ist zu den anderen Prozessabbildern.

In einer besonders bevorzugten Ausführungsform ist auf den genannten Geräten jeweils die gleiche Steuerungssoftware zur Erzeugung der Ausgangssignale dieser Geräte installiert.

In diesen Ausführungsbeispiel ist eine besonders sichere Aussage möglich, welches der Geräte fehlerhaft arbeitet, da Fehler von vornherein ausgeschlossen werden können, die von unterschiedlichen Softwareprogrammen der Geräte verursacht sein könnten. Des weiteren sind die Geräte untereinander funktional austauschbar und das nicht nur in Teilaspekten.

Besonders bevorzugt sind das Master-Automatisierungsgerät, dass Stand-by-Automatisierungsgerät und das Überwachungsgerät durch eine schnelle Kommunikationsverbindung miteinander verbunden, mittels welcher mindestens eines der Prozessabbilder von einem der Geräte zu einem anderen der Geräte innerhalb eines Zeitraums von höchstens 100 ms übertragbar ist.

Dies ist in komplexen Anwendungen, beispielsweise im Kraftwerksbereich, erforderlich, um zum einen eine schnelle Fehlererkennung zu gewährleisten und zum anderen im Fehlerfall eine schnelle und stoßfreie Umschaltung auf das nicht gestörte Automatisierungsgerät zu gewährleisten.

Realisiert werden kann eine derartige schnelle Komminikationsverbindung beispielsweise durch ein bekanntes 2.12 Gbit/sec Ethernet und/oder durch den Einsatz von sogenannten "reflective memory" Baugruppen.

Tasks und/oder Prozesse, welche auf den Geräten ablaufen, werden in einer bevorzugten Ausführungsform mittels mindestens eines Interrupts synchronisiert.

Bei dieser Ausführungsform ist besonders sicher gewährleistet, dass die von den Geräten erzeugten Prozessabbilder nahezu zeitgleich zur Verfügung stehen und jeweils zum selben Eingangs-Prozessabbild korrespondieren. Fehler, welche sich durch eine zeitversetzte Verarbeitung des Eingangs-Prozessabbilds ergeben könnten und nicht auf einen Fehler einer Soft- und/oder Hardwarekomponente eines Geräts beziehen, sind dabei praktisch ausgeschlossen und diesbezügliche irreführende Fehlervermutungen vermieden.

In einer weiteren bevorzugten Ausführungsform ist die Verbindung zwischen den genannten Geräten mittels eines periodisch übertragenen Lebenszeichen-Signals überwachbar.

Bei dieser Ausführungsform wird zusätzlich berücksichtigt, dass auch ein Fehler in der Kommunikationsverbindung, und nicht nur lokal bei einem Gerät auftreten kann.

Eines oder mehrere der Geräte, bevorzugt das Überwachungsgerät, sendet dabei ein periodisches Signal über die Kommunikationsverbindung, welches von mindestens einem anderen der Geräte periodisch auf Empfang überprüft wird.

Bleibt nun der Empfang dieses Signals aus, so ist dies ein starkes Indiz für einen Fehler der Kommunikationsverbindung, da andere, lokale Fehler der Geräte gemäß der Erfindung auf andere Weise und üblicherweise auch schneller detektiert werden.

Besonders bevorzugt basieren die genannten Geräte auf Standard-PC-Komponenten.

Dadurch ist eine überaus preisgünstige Realisierung eines erfindungsgemäßen redundanten Automatisierungssystems möglich, wobei von der rasanten Entwicklung der Performance der genannten Standard-PC-Komponenten profitiert werden kann. Darüber hinaus ist insbesondere die Beschaffung von Ersatz oder die Erweiterung der Geräte um zusätzliche Komponenten leicht durchführbar.

Ein allen genannten Ausführungsformen gemeinsamer Vorteil liegt insbesondere darin, dass das Erkennen von Fehlern unabhängig von den konkret eingesetzten Gerätekomponenten möglich ist; es ist also nicht erforderlich, spezielle technische Daten der Geräte, beispielsweise betreffend die eingesetzten "Clip Sets" für die Fehlererkennung zu verwenden. Vielmehr kann die Fehlererkennung unabhängig von den konkret verwendeten Typen an Gerätekomponenten durchgeführt werden.

Im folgenden wird ein Ausführungsbeispiel der Erfindung näher dargestellt. Es zeigt:
FIG ein erfindungsgemäßes redundantes Automatisierungssystem.

In der FIG ist ein erfindungsgemäßes redundantes Automatisierungssystem 1 dargestellt, umfassend ein Master- 7 und ein Stand-by-Automatisierungsgerät 9.

Den genannten Geräten ist ein rechnergestütztes Überwachungsgerät 11 zugeordnet.

Zum schnellen Datenaustausch zwischen den Geräten 7, 9, 11 ist eine Kommunikationsverbindung 5 vorgesehen.

Das redundante Automatisierungssystem 1 dient zur Steuerung eines nicht näher dargestellten technischen Prozesses.

Aus dem technischen Prozess werden mittels einer Prozessperipherie 13, welche Ein- und Ausgabemittel umfasst, Prozessdaten 15 erfasst und Ausgangssignale 17 an den Prozess abgegeben.

Die Prozessperipherie 13 ist sowohl mit dem Master-Automatisierungsgerät 7 als auch mit dem Stand-by-Automatisierungsgerät 9 verbunden. Eine Verbindung der Prozessperipherie 13 mit dem Überwachungsgerät 11 ist nicht vorgesehen und auch nicht erforderlich, da gemäß der Erfindung Fehler mittels eines Vergleichs von Prozessabbildern detektiert werden, wozu eine physikalische Kopplung des Überwachungsgeräts 11 an die Prozessperipherie 13 nicht erforderlich ist. Ein Ausfall der Prozessperipherie 13 würde sowieso unweigerlich zu einem Ausfall des kompletten Automatisierungssystems führen, woran auch eine direkte Kopplung der Prozessperipherie 13 an das Überwachungsgerät 11 nichts ändern würde.

Um auch derartige Fehler zu minimieren, kann eine redundante Prozessperipherie 13 vorgesehen werden.

Die Prozessdaten 15 aus dem technischen Prozess werden in Form eines softwaretechnischen Eingangs-Prozessabbilds 18a, 18b sowohl im Master-Automatisierungsgerät 7 als auch im Stand-by-Automatisierungsgerät 9 abgelegt. Über die Kommunikationsverbindung 5 wird das Eingangs-Prozessabbild 18a, 18b auch an das Überwachungsgerät 11 übermittelt.

Die in Form des genannten Eingangs-Prozessabbilds in den Geräten 7, 9, 11 vorliegenden Prozessdaten 15 werden nun entsprechend eines Steuerungsprogramms in den Geräten 7, 9, 11 verarbeitet und die dabei ermittelten Ergebnisse als ein Ausgangs-Prozessabbild 19a, 19b des Master-Automatisierungsgeräts 7 bzw. des Stand-by-Automatisierungsgeräts 9 ermittelt. Das Ausgangs-Prozessabbild 19a, 19b des als Master fungierenden Geräts wird dann auf die Prozessperipherie 13 geschaltet, um die aktuellen Ausgangssignalen 17 für den technischen Prozess zur Verfügung zu stellen.

Folglich werden die Ausgangssignale 17 entweder aufgrund des Ausgangs-Prozessabbilds 19a des Master-Automatisierungsgeräts 7 oder aufgrund des Ausgangs-Prozessabbilds 19b des Stand-by-Automatisierungsgerät 9 ermittelt.

Um nun entscheiden zu können, ob eines der genannten Ausgangs-Prozessabbilder 19a, 19b fehlerhaft ist, ist die Erzeugung eines Vergleichs-Prozessabbilds 21 mittels des Überwachungsgeräts 11 vorgesehen.

Da dem Überwachungsgerät 11 ebenso wie den anderen Geräten das Eingangs-Prozessabbild 18a, 18b zur Verfügung steht, kann es ebenso wie die anderen Geräte daraus ein Ausgangs-Prozessabbild ermitteln, welches im Zusammenhang mit dem Überwachungsgerät 11 als Vergleichs-Prozessabbild 21 bezeichnet wird, da dieses Prozessabbild nicht vorgesehen ist zur Aufschaltung auf die Prozessperipherie 13, sondern lediglich zu Vergleichszwecken mit den Ausgangs-Prozessabbildern 19a, 19b der Geräte 7, 9.

Die Ausgangs-Prozessabbilder 19a, 19b werden ebenfalls über die Kommunikationsverbindung 5 an das Überwachungsgerät 11 übermittelt, welches nun feststellen kann, ob sich eines der Ausgangs-Prozessabbilder 19a, 19b und Vergleichs-Prozessabbild 21 von den beiden anderen Prozessabbildern unterscheidet.

Das zu den beiden anderen Prozessabbildern unterschiedliche Prozessabbild kann dann eindeutig in Art einer Zwei-Aus-Drei-Entscheidung dem fehlerhaften Gerät 7, 9, 11 zugeordnet werden, womit der Fehler eindeutig lokalisiert ist.

Die Geräte 7, 9, 11 umfassen jeweils eine Umschaltlogik 23, mittels welcher im Fehlerfall das Ausgangs-Prozessabbild 19a, 19b des fehlerlosen Geräts auf die Prozessperipherie 13 schaltbar ist.

Die Geräte 7, 9 und 11 basieren bevorzugt auf Standard-PC-Komponenten.

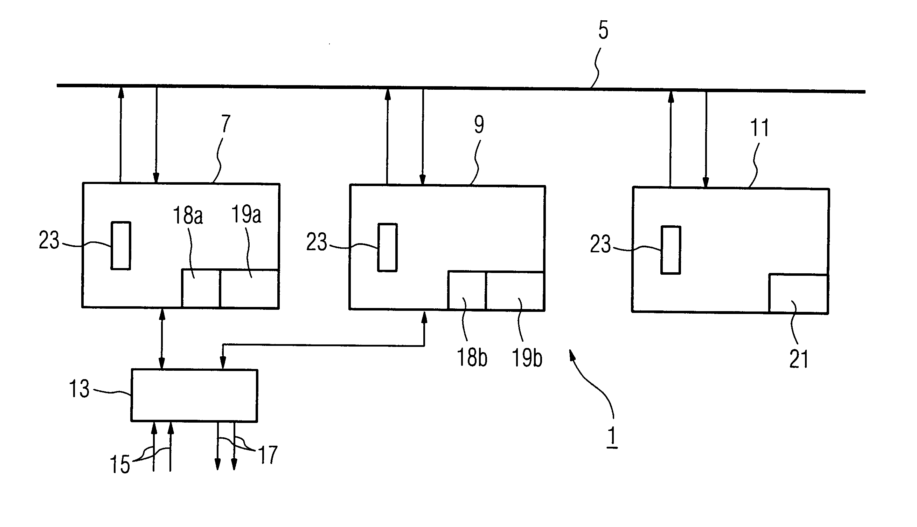

## Patentansprüche

1. Redundantes Automatisierungssystem (1) zur Steuerung eines technischen Prozesses umfassend ein Master- (7) und ein Stand-by-Automatisierungsgerät (9),
**dadurch gekennzeichnet, dass**
- ein rechnergestütztes Überwachungsgerät (11) sowohl mit dem Master- (7) als auch mit dem Stand-By-Automatisierungsgerät (9) verbunden ist,
- ein Eingangs-Prozessabbild (18a,b) bezüglich einer Anzahl an Prozessdaten (15) des technischen Prozesses zum Überwachungsgerät (11) übertragbar ist, und
- mittels des Überwachungsgeräts (11) ein Vergleichs-Prozessabbild (21) bezüglich einer Anzahl an Ausgangssignalen (17) des Automatisierungssystems (1) ermittelbar ist.

2. Redundantes Automatisierungssystem (1) nach Anspruch 1,
**dadurch gekennzeichnet, dass**
mittels des Überwachungsgeräts (11) das Vergleichs-Prozessabbild (21) vergleichbar ist sowohl mit einem ersten Prozessabbild (19a) bezüglich einer Anzahl an Ausgangssignalen des Master-Automatisierungsgeräts (7), als auch mit einem zweiten Prozessabbild (19b) bezüglich einer entsprechenden Anzahl an Ausgangssignalen des Stand-By-Automatisierungsgeräts (9).

3. Redundantes Automatisierungssystem (1) nach Anspruch 2,
**dadurch gekennzeichnet, dass**
mittels des Vergleichs in Art einer 2-aus-3-Entscheidung entscheidbar ist, ob und ggf. welches Gerät aus der Gruppe {Master-Automatisierungsgerät (7), Stand-By-Automatisierungsgerät (9), Überwachungsgerät (11)} fehlerhaft arbeitet.

4. Redundantes Automatisierungssystem (1) nach einem der Ansprüche 1 bis 3,
**dadurch gekennzeichnet, dass**
auf allen Geräten der Gruppe {Master-Automatisierungsgerät (7), Stand-By-Automatisierungsgerät (9), Überwachungsgerät (11)} die gleiche Steuerungssoftware zur Erzeugung der Ausgangssignale (17) installiert ist.

5. Redundantes Automatisierungssystem (1) nach einem der Ansprüche 1 bis 4,
**dadurch gekennzeichnet, dass**
die Geräte der Gruppe {Master-Automatisierungsgerät (7), Stand-By-Automatisierungsgerät (9), Überwachungsgerät (11)} durch eine schnelle Kommunikationsverbindung (5) miteinander verbunden sind, mittels welcher mindestens eines der Prozessabbilder (18a,18b,19a,19b) von einem der Geräte (7, 9, 11) zu einem anderen der Geräte (7, 9, 11) innerhalb eines Zeitraums von höchstens 100ms übertragbar ist.

6. Redundantes Automatisierungssystem (1) nach einem der Ansprüche 1 bis 5,
**dadurch gekennzeichnet, dass**
eine Synchronisation des Ablaufs von Tasks und/oder Prozessen auf den genannten Geräten (7,9,11) mittels mindestens eines Interrupts erzielbar ist.

7. Redundantes Automatisierungssystem (1) nach einem der Ansprüche 1 bis 6,
**dadurch gekennzeichnet, dass**
die Verbindung zwischen den genannten Geräten (7,9,11) mittels eines periodisch übertragenen Lebenszeichen-Signals überwachbar ist.

8. Redundantes Automatisierungssystem (1) nach einem der Ansprüche 1 bis 7,
**dadurch gekennzeichnet, dass**
die genannten Geräte auf Standard-PC-Komponenten basieren.
